# EUROPÄISCHE PATENTANMELDUNG

(11) **EP 1 553 758 A1**
(43) Veröffentlichungstag der Anmeldung: **13.07.2005**
(21) Anmeldenummer: 03027791.7
(22) Anmeldetag: 03.12.2003
(51) Int. Cl.: H04N 5/232

(54) **Optische Vorrichtung zur Ausgleich des Bildverwakelns mit Anzeige der durchgeführten Korrektur**

(71) Anmelder: Gerd Stueckler, 83684 Tegernsee (DE)
(72) Erfinder: Gerd Stueckler, 83684 Tegernsee (DE)
(74) Vertreter: Hössle Kudlek & Partner

(57) **Zusammenfassung**

Stabilisierungs-Einrichtung, insbesondere zur Bildstabilisierung und/oder stabilisierten Bildausschnittsverlagerung, für handgeführte Bildaufnahmegeräte, wie einer Filmkamera, einer Fotokamera, eines Fernglases, oder dergleichen, mit einer Einrichtung zur Ermittlung der Lagedifferenz zwischen einer tatsächlichen Lage des Bildaufnahmegerätes und einer Soll-Lage des Bildaufnahmegerätes, und mit einer Kompensations-Vorrichtung zur Kompensation der Auswirkung der ermittelten Lagedifferenz auf einen abgebildeten Bildausschnitt, wobei eine Mitteilungseinrichtung zur Mitteilung, insbesondere optischen Anzeige, der Lagedifferenz bezüglich vorgebbarer Lagedifferenz-Werte oder -Wertebereiche, wobei die Mitteilung so erfolgt, dass ein Anwender in die Lage versetzt wird, mittels Ausrichten des Bildaufnahmegerätes die Lagedifferenz auf einen vorgegebenen Wert oder in einem vorgegebenen Wertebereich zu steuern.

## Beschreibung

Die Erfindung stellt eine Stabilisierungs-Einrichtung für Bildaufnahmegeräte, z. B. eine Filmkamera, ein Fernglas, eine Fotokamera etc., zur Verfügung, die dem Anwender eine Stabilisierung eines Bildausschnitts und/oder eine Stabilisierung einer Bildausschnitts-Verlagerung und optional auch eine Stabilisierung des Ablaufs eines vorprogrammierten Bewegungspfades ermöglicht.

### Stand der Technik

Bei einer Vielzahl von Bildaufnahmegeräten ist es zweckmäßig, sowohl Verwacklungsunschärfen bei Einzelbildern als auch unerwünschte Verlagerungen von Einzelbildern einer Bildfolge oder Ungleichmäßigkeiten einer Bildverlagerungs-Bewegung während Schwenks so weit wie möglich zu unterdrücken. Dies trifft vor allem für von Hand geführte Bildaufnahmegeräte zu, die eine Bildfolge aufnehmen, wie z.B. Filmkameras und Ferngläser.

Im Stand der Technik sind hierzu bereits verschiedene Lösungen bekannt.

So werden für Filmaufnahmen vor allem Stative eingesetzt, da bis heute nur diese professionellen Ansprüchen an die Bildruhe genüge tun. Ihr Nachteil besteht in ihrer Größe und ihrem großen Gewicht. Deshalb gibt es vor allem für Ferngläser und Videokameras schon seit vielen Jahren Stabilisierungs-Systeme, die in das Bildaufnahmegerät eingebaut sind.

So gibt es im Objektiv des Bildaufnahmegerätes eingebaute oder auf dieses aufsetzbare Stabilisierungs-Systeme, welche mittels steuerbarer optischer Elemente das in der Abbildungsebene abgebildete Bild in dieser verlagern können. Als steuerbare optische Elemente werden variable Prismen oder lateral zur optischen Achse verschiebbare Linsen eingesetzt. Ihre Verlagerung wird von einem Bewegungssensor so gesteuert, dass die durch ein Zittern des Bildaufnahmegerätes verursachten Abbildverlagerungen kompensiert werden. Diese Systeme haben den Vorteil, dass sie auch für Filmkameras verwendet werden können, welche auf chemischem Film aufnehmen.

Weiterhin gibt es für Bildaufnahmegeräte mit elektronischem Aufnahmesensor, wie beispielsweise Videokameras, Bildstabilisierungs-Systeme, welche den zu verwertenden Bildausschnitt auswählen können. Dieser Bildausschnitt bzw. der ganze Aufnahmesensor wird von einem Bewegungssensor so verlagert, dass den durch ein Zittern des Bildaufnahmegerätes verursachten Abbildverlagerungen in der Sensorebene möglichst exakt gefolgt wird.

Diese optischen und elektronischen Stabilisierungs-Systeme arbeiten im wesentlichen nach dem gleichen Regelungs-Prinzip. Es wird eine gewünschte Soll-Lage oder Folge von Soll-Lagen des Bildaufnahmegerätes und damit eine gewünschte Bildausschnitts-Lage oder Bildausschnitts-Folge, mit der tatsächlichen jeweiligen Ist-Lage des Bildaufnahmegerätes verglichen und daraus eine Lagedifferenz ermittelt. Zur technischen Realisation dieser Ermittlung der Lagedifferenz sind bereits Lösungen vielfältigster Art bekannt, welche z.B. Beschleunigungs-Sensoren, Kreiselsysteme, Winkelmeß-Vorrichtungen usw. verwenden. Die von einer jeweiligen Lagedifferenz verursachte Abweichung zum gewünschten Bildausschnitt wird von einer der oben beschriebenen Kompensations-Vorrichtungen kompensiert.

Sowohl die optischen als auch die elekronischen Stabilisierungs-Systeme unterdrücken nach diesem Regelmechanismus sehr gut alle unerwünschten hochfrequenten Lagedifferenzen. Dies erfolgt jedoch aus prinzipiellen Gründen nicht für die niederfrequenten Lagedifferenzen, welche vor allem vom Anwender durch seine unervermeidbaren, langsamen Schwankbewegungen verursacht werden, wenn er z.B. eine Filmkamera oder ein Fernglas mit der Hand führt. Diese langsamen Bewegungen dürfen, zumindest ab einer gewissen Größe, nicht kompensiert werden, da es anderenfalls nicht möglich wäre, Bildfolgen während einer gewollten Schwenkbewegung des Bildaufnahmegerätes aufzunehmen. Herkömmliche Stabilisations-Systeme haben keine Möglichkeit, eindeutig zu unterscheiden, ob eine langsame Bewegung des Bildaufnahmegerätes über eine gewisse Grenze hinaus unerwünscht, oder gewollt ist.

Keines der bisher bekannten Systeme kann alle Anforderungen an ein ideales Stabilisierungs-System erfüllen. Ein Stativ liefert nur bei einem ruhigen Untergrund einen perfekt ruhigen Bildausschnitt, wohingegen völlig gleichmäßige Schwenks nur sehr schwer zu erreichen sind, da die Schwenkgeschwindigkeit in der Praxis von der Größe des Drucks auf den Schwenkhebel abhängt. Die bekannten optischen und elektronischen Stabilisierungs-Systeme unterdrücken nur das unerwünschte höherfrequente Zittern sehr gut, sie können aber keinen völlig ruhig stehenden Bildausschnitt oder eine Stabilisierung eines Bewegungspfades, wie z.B. bei einem horizontalen Schwenk erforderlich, erreichen.

### Aufgabe der Erfindung

Die Aufgabe der vorliegenden Erfindung besteht daher vor allem darin, eine Stabilisierungs-Einrichtung zur Verfügung zu stellen, mit der sowohl ein völlig ruhig stehender Bildausschnitt von beliebiger Dauer ohne unerwünschte Zitter- und Schwankbewegungen als auch eine völlig gleichmäßige Bildverlagerungs-Bewegungen für z.B. Schwenks mittels handgeführter Bildaufnahmegräte ermöglicht wird, wobei der Anwender die Kontrolle darüber erhält, ob, wann und wie sich ein Bildausschnitt verlagern soll.

Diese Aufgabe wird gelöst durch eine Stabilisierungseinrichtung mit den Merkmalen des Patentanspruchs 1 sowie ein Verfahren mit den Merkmalen des Patentanspruchs 10.

### Vorteile der Erfindung

Durch das Vorsehen einer Mitteilungs-Einrichtung gemäß Anspruch 1 kann mittels Ausrichten des Bildaufnahmegerätes vom Anwender die Lagedifferenz zwischen Ist-Lage und Soll-Lage z.B. in der Nähe des Lagedifferenz-Wertes Null gehalten werden. So kann vermieden werden, dass die Lagedifferenz ungewollt, und aufgrund des stabilisierten Bildes unbemerkt, langsam immer mehr von Null abweicht. Bei herkömmlichen Stabilisierungsvorrichtungen hat der Anwender keine Möglichkeit, diese Lagedifferenz zu erkennen und entsprechende Korrekturen in der Ausrichtung des Bildaufnahmegeräts einzuleiten. Dies hatte zur Folge, dass bei Überschreiten einer bestimmten Lagedifferenz, eine Bildverlagerung unvermeidlich war, da die Stabilisierungs-Vorrichtung eine derartige Lagedifferenz als gewünschte Verlagerung des Bildausschnittes interpretieren musste.

Außerdem kann erfindungsgemäß die Amplitude der ungewollten langsamen Schwankungen der Lagedifferenz aufgrund der Rückkopplung über die Mitteilungs-Einrichtung an den Anwender auf kleinere Werte beschränkt werden, als dies ohne diese Rückkoppplung der Fall ist. Auf diese Weise können herkömmliche Stabilisierungs-Vorrichtungen in ihrer Wirkung bereits erheblich verbessert werden. Es können ferner auch Stabilisierungs-Vorrichtungen mit einem gegenüber herkömmlichen Lösungen verkleinerten Stabilisierungsbereich eingesetzt werden.

Die Mitteilung der Abweichung der Lagedifferenz bezüglich eines vorgegebenen Wertes oder Bereiches kann auf vielfältige Weise, wie z.B. auch akustisch erfolgen. Vorzugsweise besteht die Mitteilungs-Einrichtung aber aus einer optischen Anzeige.

So kann die Abweichung der Lagedifferenz von dem Wert Null oder von den Grenzen eines Lagedifferenz-Bereichs z.B. mittels am Sucherbildrand angeordneter Pfeile mitgeteilt werden. Die Größe der Abweichung kann z.B durch die Helligkeit und/oder Farbe und/oder Blinkfrequenz der Pfeile anzeigt werden. Diese Art der Anzeige hat den Vorteil, dass sie dass Sucherbild nicht abdeckt, wie dies insbesondere bei Ferngläsern wünschenswert ist.

Vorteilhafterweise erfolgt die Anzeige, insbesondere bei Filmkameras, auf grafische Weise mittels eines elektronischen Displays, dessen Anzeige dem Sucherbild überlagert wird. Die grafische Anzeige hat den Vorteil, dass der Anwender einen Lagedifferenz-Wert in einfacher Weise noch genauer steuern kann und dass übersichtlich auch mehrere Lagedifferenz-Arten mit ihren vorgebbaren Lagedifferenz-Werten oder -Wertebereichen angezeigt werden können, wie dies für professionelle Anwendungen der Erfindung wünschenswert ist.

Vorteilhafte Ausgestaltungen der Erfindung sind Gegenstand der Unteransprüche.

Gemäß einer bevorzugten Ausführungsform der Stabilisierungs-Einrichtung sind den Sollbildausschnitt definierende Parameter, wie Soll-Ausrichtung der optischen Achse und deren Soll-Bewegung etc., über Algorithmen vorgebbar, welche für die wichtigsten Stabilisierungs-Aufgaben, wie z.B. Bildstillstand, gleichförmige Bewegung, Beschleunigung und Abbremsen während Schwenks, von der Lagedifferenz vorzugsweise vollkommen unabhängig sind, solange die Lagedifferenz-Werte innerhalb eines vorgebbaren, der jeweiligen Aufgabe zugeordneten, Lagedifferenz-Wertebereichs liegen. Natürlich kann es auch Aufgaben und diesen zugeordnete Lagedifferenz-Bereiche geben, für welche die Lagedifferenz-Werte mit in die Vorgabe der Soll-Lage eingehen sollen, wie z.B. für die Aufgabe, den Bildausschnitt analog zur Ausrichtung des Bildaufnahmegerätes zu verlagern.

Weiterhin erweist es sich als vorteilhaft, den einer Aufgabe zugeordneten Lagedifferenz-Bereich größer vorzugeben, als der Umfang der vom Anwender durch sein Zittern und Schwanken bedingten Lagedifferenz-Schwankamplitude oder Störungs-Wertemenge. So kann ein der Aufgabe "Bildstillstand" zugeordneter Lagedifferenz-Bereich z.B. +-2 Grad in jeder Richtung relativ zur Soll-Ausrichtung der konstruktiven optischen Achse des Bildaufnahmegerätes betragen, was um einiges größer ist, als eine typische, vom Anwender verusachte, Lagedifferenz-Schwankamplitude der optischen Achse.

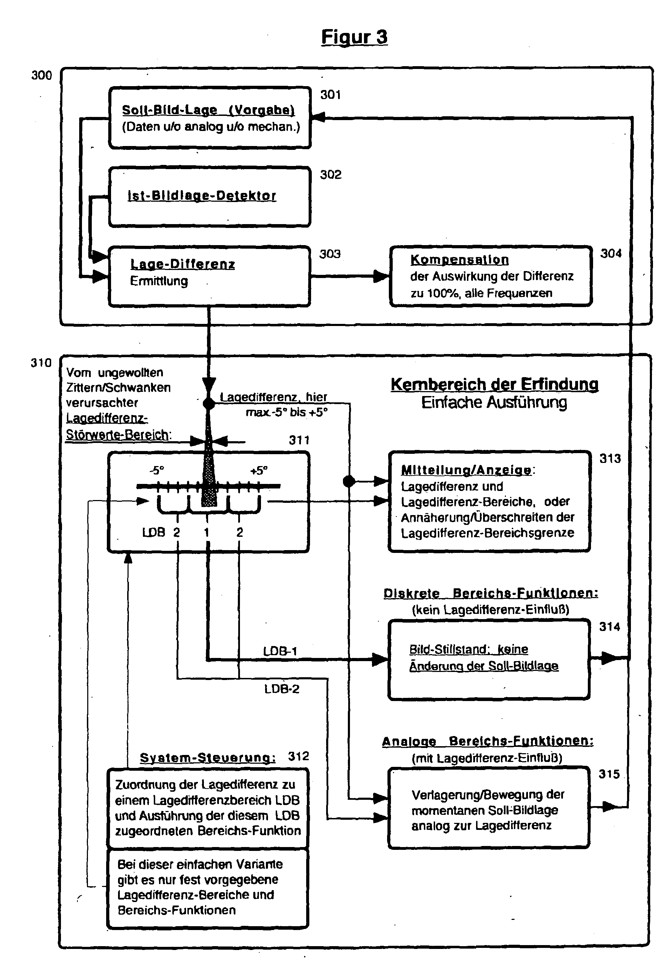

Der Anwender kann jetzt gezielt einen Bildausschnitts-Stillstand bewirken, indem er den Lagedifferenzwert durch entsprechendes Ausrichten des Bildaufnahmegerätes in diesen der Aufgabe "Bildstillstand" zugeordneten Bereich steuert und ihn dort hält, was ihm aufgrund der Rückkopplung über die Mitteilungs-Einrichtung und der Größe des Lagedifferenzbereichs für Bildstillstand leicht und für beliebig lange Zeit möglich ist. Die Soll-Lagedaten, z.B. die Soll-Lagedaten der konstruktiven optischen Achse, werden dann konstant gehalten, auch wenn die Lagedifferenzwerte aufgrund eines Zitterns oder Schwankens des Anwenders z.B. innerhalb +- 1 Grad schwanken. Da außerdem vorschlagsgemäß ständig die Auswirkung jeglicher Lagedifferenz auf den abgebildeten Bildausschnitt von einer Kompensations-Vorrichtung, so weit technisch irgend möglich, vollständig und frequenzunabhängig kompensiert wird, wird z.B. der Einfluß des unerwünschten Schwankens der konstruktiven optischen Achse auf einen Bildstillstand vollständig eliminiert. Damit ist die wichtigste Aufgabe einer Stabilisierungs-Einrichtung gelöst (siehe auch FlußDiagramm in Figur 3).

Soll der Bildausschnitt verlagert werden, steuert der Anwender den Lagedifferenzwert aus dem für "Bildstillstand" reservierten Bereich heraus und in einen z.B. für analoge Verlagerung des Bildausschnitts vorgesehenen Lagedifferenzbereich, wie er weiter unten beschrieben wird.

Gemäß einer weiteren bevorzugten Ausführungsform der erfindungsgemäßen Stabilisierungs-Einrichtung für z.B. professionelle Filmkameras werden gleichzeitig mehrere Lagedifferenz-Arten berücksichtigt. Vorteilhaft hierbei ist, dass bei Einsatz der zuvor beschriebenen erfindungsgemäßen Prinzipien ein von allen ungewollten Bewegungen jeglicher Richtung völlig unbeeinflusster Bildausschnitt realisierbar ist. Der zusätzlich technische Aufwand ist im Vergleich zum Mindestaufwand relativ gering.

Hierzu wird vorzugsweise mittels bekannter technischer Mittel nicht nur die Ausrichtungs-Differenz der konstruktiven optischen Achse zu einer Soll-Ausrichtung, sondern auch die Positions-Differenz eines Bezugspunktes des Bildaufnahmegerätes zu einer Soll-Position und vorzugsweise auch die Horizont-Differenz des Bildaufnahmegrätes zu einer Soll-Horizontlage ermittelt. Der Vorteil einer Stabilisierung des Bildhorizonts kommt vor allem bei Filmaufnahmen zum Tragen. Der Vorteil, den eine Berücksichtigung der Positions-Differenz bringt, liegt insbesondere darin, dass dann auch Aufnahmen mit extremen Telebrennweiten stabilisiert werden können: ist z.B. der aufgenommene Bildausschnitt nur noch 20 cm breit und das Bildaufnahmegerät schwankt um 1 cm zur Seite hin, so verlagert sich der Bildausschnitt ungewollt bereits um 5% der Bildbreite. Die Bezugspunkt-Differenz wird vorzugsweise nur in der Ebene senkrecht zur Ausrichtung der optischen Achse ermittelt, da unerwünschte Verlagerungen des Bildaufnahmegerätes entlang der optischen Achse sich nur bei extremen Nahaufnahmen des aufgenommenen Bildausschnitts auswirken.

Die Kompensations-Vorrichtung ist zweckmäßigerweise in der Lage, die Auswirkungen einer jeden der ermittelten Lagedifferenz-Arten auf den aufgenommenen Bildausschnitt möglichst vollständig und frequenzunabhängig zu kompensieren. Für die Kompensation der Positions-Differenz erfolgt dies vorzugsweise durch eine Näherungslösung, indem aus dem Wert der Positions-Differenz und der momentanen Entfernungseinstellung der Optik ein Winkel berechnet wird, welcher zum Wert der ermittelten Ausricht-Differenz addiert wird, so dass die Kompensations-Vorrichtung nur noch zwei Lagedifferenz-Arten kompensieren muß. Der Winkel ergibt sich aus W = arctan [Bezugspunkt-Differenz / Entfernung]. Für die Kompensation der Horizont-Differenz wird, falls vorhanden, vorzugsweise der ganze elektronische Bildsensor gedreht oder eine Elektronik zur Drehung des ausgewerteten Bildausschnitts auf dem Bildsensor eingesetzt, da eine Drehung mittels optischer Elemente aufwändig ist.

Für jede der drei Lagedifferenz-Arten wird vorzugsweise deren von der Kompensations-Vorrichtung kompensierbare Lagedifferenz-Gesamt-Wertemenge in mehrere Lagedifferenz-Bereiche unterteilt, welchen unterschiedliche Bereichs-Funktionen zur Lösung einer jeweiligen Stabilisierungs-Aufgabe oder für sonstige Steuerzwecke zugeordnet sind. Diese Bereichsfunktionen werden ausgeführt, solange sich die entsprechende Lagedifferenz innerhalb des entsprechenden Lagedifferenz-Bereichs befindet, wobei dies vorzugsweise von Mindestaufenthaltszeiten abhängig ist. Dies hat den Vorteil, dass Bereichsfunktionen nicht versehentlich ausgeführt bzw. beendet werden, wenn beispielsweise unbeabsichtigt aufgrund einer Zitter- oder Schwankungsbewegung ein Lagedifferenzbereich nur für kurze Zeit verlassen wird.

Vorzugsweise werden außerdem die höherfrequenten Schwankungen der Lagedifferenz-Werte, mit Ausnahme der an die Kompensations-Vorrichtung geleiteten Werte, unterdrückt, was den Vorteil hat, dass ein schnelles Zittern einer angezeigten Lagedifferenz weniger sichtbar ist bzw. in der Darstellung geglättet wird und daher die Lagedifferenz für den Anwender, der ein mit der Erfindung ausgestattetes Bildaufnahmegerät von Hand hält, leichter steuerbar ist.

Für spezielle Bildaufnahmegeräte, wie etwa professionelle Filmkameras, sind vorzugsweise entsprechend den wichtigsten Stabilisierungs-Aufgaben folgende Lagedifferenz-Bereiche und diesen zugeordnete diskrete Bereichs-Funktionen zur Vorgabe der Soll-Bildausschnittslage vorgesehen, in deren Ergebnis der jeweilige Lagedifferenzwert nicht mit eingeht (nur die Tatsache, dass sich der aktuelle Lagedifferenzwert in einem bestimmten Lagedifferenz-Bereich befindet, wird berücksichtigt), so dass ungewollte Schwankungen des Bildaufnahmegerätes ohne Auswirkung auf den abgebildeten Bildausschnitt bleiben:
- Stillstand des Bildausschnitts-Zentrums,
- Beibehaltung der momentanen Bewegung des Bildausschnitts-Zentrums,
- Beibehaltung eines gewünschten Bildhorizonts,
- Beschränkung der Bewegung auf Vorgabewerte und Maximalwerte,
- Beschleunigung der Bewegung bei vorgegebener Bewegungsrichtung,
- Ausführung eines vorprogrammierten Bewegungsablaufs, mit Anweisungs-Mitteilung.

Hiermit können die drei wichtigsten Aufgaben einer Stabilisierungs-Einrichtung für eine Filmkamera gelöst werden, nämlich eine von allen ungewollten Bewegungen der Filmkamera befreite Aufnahme eines still stehenden oder sich gleichmäßig bewegenden Bildausschnitts oder die Aufnahme während eines horizontalen Schwenks mit stetigem Anlauf, gleichmäßigem Verlauf und stetigem Auslauf.

Außerdem sind zur Bildausschnitts-Verlagerung analog zur Ausrichtung des Bildaufnahmegerätes Lagedifferenz-Bereiche und diesen zugeordnete analoge Bereichs-Funktionen zur Vorgabe der Soll-Bildausschnittslage vorgesehen, in deren Ergebnis der jeweilige Lagedifferenzwert mit eingeht, so dass Bewegungen bzw. Schwankungen des Bildaufnahmegerätes sich auf den abgebildeten Bildausschnitt mit auswirken:
- Änderung der momentanen Bewegung des Bildausschnitts-Zentrums.
- Änderung des momentanen Bildhorizonts.
- Änderung des Positions-Bezugspunktes des Bildaufnahmegerätes.

Da Änderungen einer Bewegung meistens nur während einer sehr kurzen Zeit erfolgen, fallen schwankungsbedingte Unregelmäßigkeiten nur wenig auf, so dass der Vorteil einer z.B. analog zur Ausrichtung des Bildaufnahmegrätes steuerbaren Änderung von Geschwindigkeit und Richtung einer Bildausschnittsverlagerung überwiegt.

Zur Mitteilung der drei Lagedifferenz-Arten bezüglich der Lagedifferenz-Bereiche wird vorzugsweise ein optisches Display eingesetzt, auf dem vorzugsweise sowohl die drei Lagedifferenz-Arten und deren Komponenten, als auch die den unterschiedlichen Aufgaben zugeordneten Lagedifferenz-Bereiche in grafischer Form angezeigt werden. Für Filmkameras mit einem optischen Sucherbild kann das Displaybild diesem Sucherbild z.B. über ein Prisma optisch überlagert werden. Bei Videokameras wird vorzugsweise das bereits vorhandene Sucherbild-Display verwendet.

### Zeichnung

Folgend werden bevorzugte Ausgestaltungen der Erfindung, insbesondere unter Darstellung der oben angeführten diskreten und analogen Bereichs-Funktionen, deren Lagedifferenz-Bereiche und deren Anzeige beschrieben, wobei Bezug auf die Figuren 1 bis 6 genommen wird. Hierbei zeigt bzw. zeigen:
Figur 1 eine bevorzugte Ausgestaltung eines im Rahmen der Erfindung realisierbaren Sucherbildes, insbesondere einer Filmkamera,
Figur 2 eine schematische Sicht von oben auf ein Bildaufnahmegeräte, insbesondere eine Filmkamera oder ein Fernglas, bei der bzw. dem die erfindungsgemäße Stabilisierungseinrichtung einsetzbar ist,
Figur 3 ein blockschaltbildartiges Funktionsdiagramm zur Darstellung einer ersten bevorzugten Ausführungsform einer einfachen erfindungsgemäßen Bild-Stabilisierung bzw. - führung,
Figur 4 eine zweite bevorzugte Ausführungsform einer komplexen erfindungsgemäßen Bild-Stabilisierung bzw. - führung,
Figur 3 ein blockschaltbildartiges Funktionsdiagramm zur Darstellung einer ersten bevorzugten Ausführungsform einer einfachen erfindungsgemäßen Bild-Stabilisierung bzw. - führung.

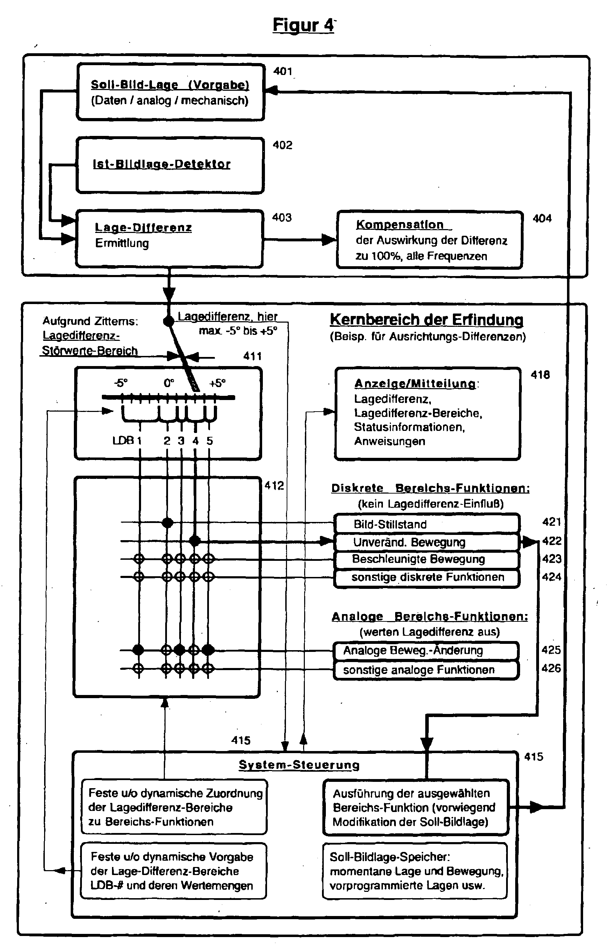

Figur 4 eine zweite bevorzugte Ausführungsform einer komplexeren erfindungsgemäßen Bild-Stabilisierung bzw. - führung,

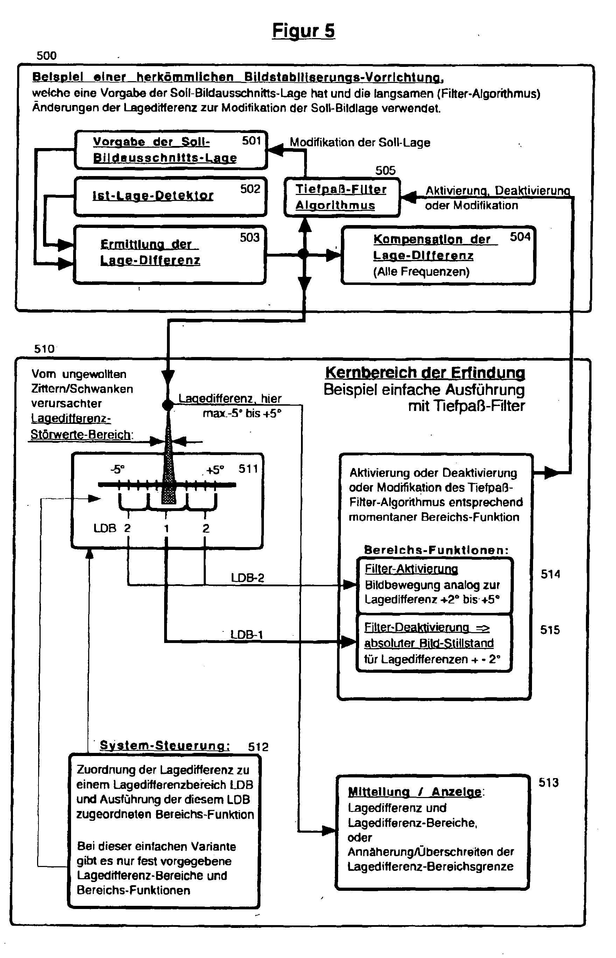

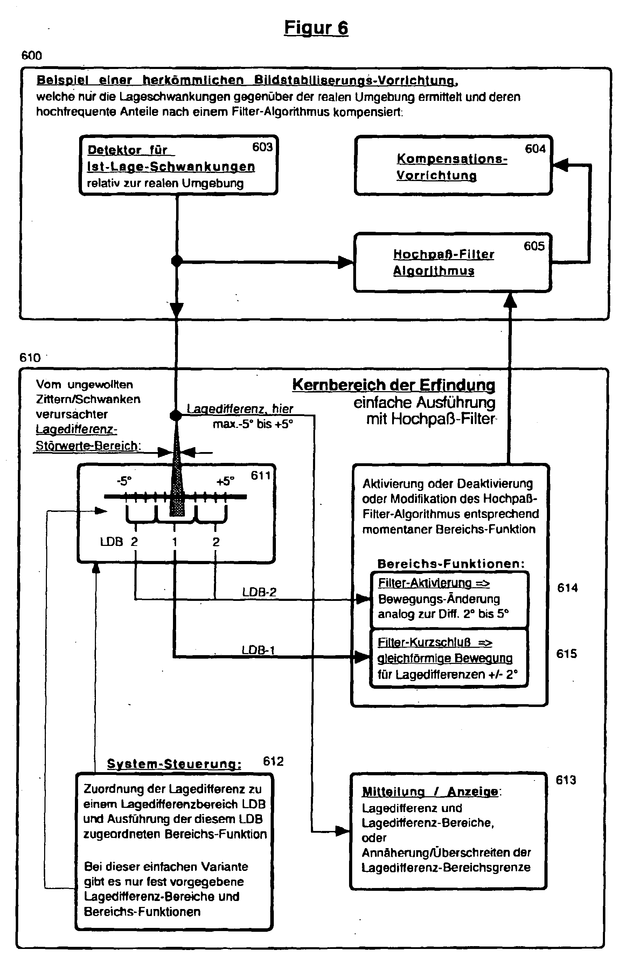

Figur 5 und 6 zwei weitere bevorzugte Ausführungsformen einer erfindungsgemäßen Bild-Stabilisierung, welche darstellen, wie herkömmliche Stabilisierungs-Vorrichtungen auch ohne Neukonstruktion modifiziert werden können, um die Vorteile der Erfindung zu nutzen.

Es versteht sich, dass die vorstehend benannten und die nachstehend noch zu erläuternden Merkmale nicht nur in den jeweils angegebenen Kombination, sondern auch in anderen Kombinationen oder in Alleinstellung verwendbar sind, ohne den Rahmen der vorliegenden Erfindung zu verlassen.

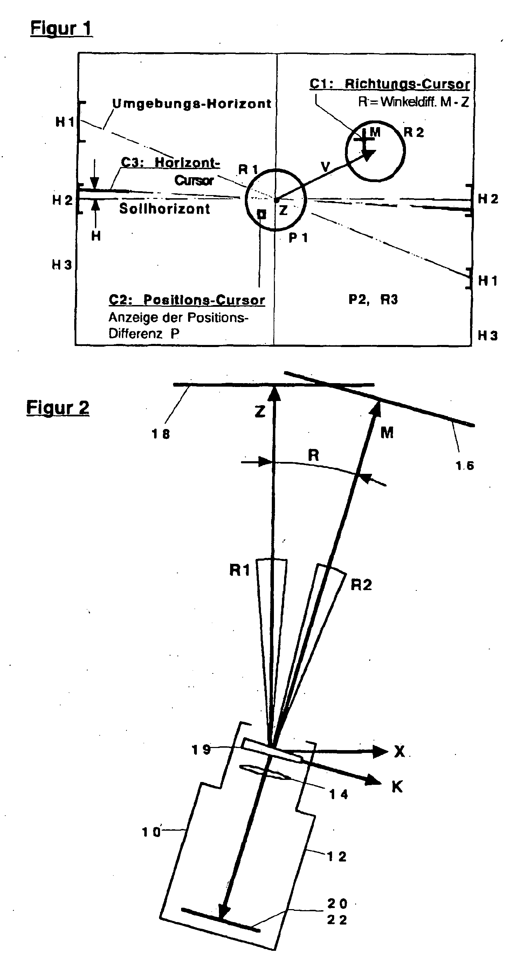

Eine Filmkamera, bei welcher die erfindungsgemäße Stabilisierungs-Einrichtung in bevorzugter Weise einsetzbar ist, ist in Figur 2 schematisch von oben dargestellt und insgesamt mit 10 bezeichnet. Die Filmkamera weist ein Gehäuse 12 auf, in dem die erfindungsgemäße Stabilisierungs-Einrichtung zusammen mit weiteren Komponenten angeordnet ist. Die Optik der Filmkamera 10 ist schematisch vereinfacht dargestellt und mit 14 bezeichnet. Die Optik 14 definiert eine konstruktive optische Achse der Filmkamera 10, welche in Figur 2 mit M bezeichnet ist. Die konstruktive optische Achse M definiert ihrerseits einen im folgenden als Ist-Bildausschnitt 16 bezeichneten Bildausschnitt. Zweckmäßigerweise ist die Achse M auf die Mitte dieses Ist-Bildausschnitts gerichtet. Unter Ist-Bildausschnitt wird im folgenden der Bildausschnitt verstanden, der von der Kamera dann aufgenommen wird, bzw. im Sucherbild der Kamera vorliegt, wenn keine Kompensation bzw. Stabilisierung des Bildes mittels noch zu erläuternden Kompensationsvorrichtungen der Filmkamera ausgeführt wird. Der Ist-Bildausschnitt ist somit auch als der Bildausschnitt zu verstehen, dessen Mitte durch die konstruktive optische Achse M definiert ist. Es sei zu verstehen gegeben, dass der Begriff "Ist-Bildausschnitt" gewissermaßen einen "virtuellen" Bildausschnitt bezeichnet, welcher tatsächlich durch die optische Einrichtung 10 in der Regel nicht zu beobachten bzw. aufzunehmen ist.

Weiterhin wird davon ausgegangen , dass ein mit 18 bezeichneter Soll-Bildausschnitt der Bildausschnitt ist, der vom Anwender gewünscht wird. D. h. dieser möchte diesen Soll-Bildausschnitt 18, bzw. dessen Verlagerungsbewegung, über einen bestimmten Zeitraum bzw. beliebig lange beibehalten. Die entsprechende Soll-Ausrichtung der Kamera, im Folgenden auch wirksame optische Achse genannt, ist mit Z bezeichnet. Im in Figur 1 dargestellten Zeitpunkt ist die Filmkamera 10 entlang ihrer konstruktiven optischen Achse M ausgereichtet, welche sich von der ursprünglichen Ausrichtung Z um einen Lagedifferenz-Winkel R unterscheidet.

Die Größe dieses Winkels ergibt sich aus der vom Anwender durch gezieltes Ausrichten der Kamera verursachten Lagedifferenz plus einem vom unvermeidbaren Zittern und Schwanken des Anwenders verursachten Störwinkels.

Mittels einer der Optik 14 vorgeschalteten ersten Kompensations-Vorrichtung 19 ist diese Lagedifferenz R kompensierbar. Das heißt, die wirksame optische Achse der Filmkamera in dem in Figur 1 dargestellten Zeitpunkt ist Z, obwohl die konstruktive optische Achse M ist.

Derartige Kompensations- bzw. Bildverlagerungs-Vorrichtungen wie sie hier mit 19 bezeichnet sind, sind an sich bekannt und werden daher nicht weiter erläutert.

Senkrecht zur Achse Z und durch den Schnittpunkt der Achsen M, Z in der Bildverlagerungs-Vorrichtung 18 verläuft eine weitere Achse X, wobei eine durch die Achsen X und Z aufgespannte Ebene den Soll-Horizont des Soll-Bildausschnitts 18 beschreibt.

Der Ist-Horizont der Filmkamera wird durch die Achse M und eine hierzu senkrecht verlaufende Achse K definiert, wobei durch diese beiden Achsen wieder eine Ebene aufgespannt ist.

Der Zusammenhang zwischen Soll-Horizont und Ist-Horizont sei ebenfalls anhand eines einfachen Beispiels dargestellt: Geht man davon aus, dass die Achsen M, Z und X in der Zeichenebene der Figur 2, d.h. horizontal, verlaufen, und weist lediglich die Achse K eine Komponente senkrecht zu dieser Zeichenebene auf, führt dies dazu, dass der Soll-Horizont ebenfalls in der Zeichenebene, also horizontal, verläuft, der Ist-Horizont jedoch schräg hierzu, wie weiter unten unter Bezugnahme auf Fig. 1 weiter verdeutlicht werden wird.

Die Kamera 10 kann eine weitere, mit 20 bezeichnete Kompensationsvorrichtung zur Kompensation der Lagedifferenz zwischen Ist-Horizont und Soll-Horizont, im Folgenden mit H bezeichnet, aufweisen. Die Kompensationsvorrichtung 20 ist hier in der Abbildebene 22 der Kamera 10 vorgesehen und kompensiert die Horizontdifferenz z. B. mittels entsprechender Drehung des elektronischen Bildsensors.

Die in Figur 1 dargestellte Lage-Richtungs-Differenz R wird lediglich durch eine Schwenkbewegung der Filmkamera 10 um den Schnittpunkt der Achsen M, Z bewirkt. In der Realität sind auch lineare Abweichungen zu berücksichtigen, d.h. im Wesentlichen senkrecht zu der den Soll-Bildausschnitt definierenden Achse Z. Derartige Abweichungen werden im Folgenden als P bezeichnet.

In Figur 1 ist eine bevorzugte Ausführungsform eines im Rahmen der erfindungsgemäßen Vorrichtung verwendbaren Sucherbildes dargestellt.

In dem Sucherbild gemäß Figur 1 erkennt man zunächst die Achsen Z und M. Die Achse Z befindet sich hierbei in der Mitte des Sucherbildes. Mittels im Sucherbild darstellbarer geometrischer Figuren, welche im vorliegenden Ausführungsbeispiel als Kreise ausgebildet sind, sind verschiedene Lagedifferenzbereiche definierbar, denen jeweils unterschiedliche Funktionen zuordnenbar sind.

Für die Anzeige der Ausrichtungsdifferenz, d. h. der Abweichung zwischen den Achsen Z und M, wird vorzugsweise ein Richtungs-Cursor C1 z. B. in Form eines evtl. blinkenden, kleinen Kreuzes angezeigt. Er wird vorzugweise im Zentrum des Sucherdisplays angezeigt, wenn die momentane Ausrichtungsdifferenz gleich Null ist.

Im Zentrum des Displays wird ein Lagedifferenz-Bereich R1 für die diskrete Bereichsfunktion "Stillstand des Bildausschnitts-Zentrums", vorzugsweise in Form eines Kreises, abgebildet. Dieser Bereich entspricht vorzugsweise einem Lagedifferenz-Wertebereich von z.B. 0,7 Grad um die Soll-Ausrichtung der optischen Achse. Die Bereichs-Funktion wird ausgeführt, wenn der Richtungs-Cursor C1 in den Kreis R1 gesteuert und dort gehalten wird. Sie hält dann die Soll-Ausrichtung konstant, was einem Stillstand des Bildausschnittes entspricht.

Wird der Cursor C1 aus dem Bereich R1 herausgesteuert, so gerät er in den restlichen Bereich R3, dem vorzugsweise die analoge Bereichsfunktion "Änderung der momentanen Ausrichtungs-Bewegung" zugeordnet ist, welche vorzugsweise wie folgt arbeitet: die Soll-Ausrichtung wird zuerst in der Richtung bewegt, in welcher der Cursor C1 den Kreis R1 verläßt. Sobald der Cursor für eine Mindestzeit außerhalb von R1 ist, wird ein Vektor ermittelt und vorzugsweise als Pfeil V angezeigt, der vom Kreiszentrum bis zum Kreisrand zeigt. Ab diesem Moment wird der Lagedifferenz-Bereich R1 deaktiviert, wobei er aber weiterhin angezeigt wird. Die Länge und Richtung des Pfeils V sind ein Maß für die Göße und Richtung der momentanen Soll-Verlagerungsgeschwindigkeit des Soll-Bildausschnitts, wobei diese vorzugsweise unter Berücksichtigung des momentanen Bildwinkels der Optik in Bildausschnittsbreiten je Sekunde gemessen wird. Die Pfeillänge ist vorzugsweise in etwa proportional zum Logarithmus der momentanen Soll-Geschwindigkeit, wobei die Anfangsgeschwindigkeit gleich Null oder sehr gering ist.

Mittels Steuerung der Cursorposition des Cursors C1 (durch entsprechende Bewegung bzw. Ausrichtung der Filmkamera) wird jetzt die Pfeilspitze in eine beliebige Richtung gesteuert und auf diese Weise Richtung und Geschwindigkeit der Bewegung des Soll-Bildausschnitts verändert. Vorzugsweise folgt die Pfeilspitze nicht direkt dem Cursor C1, sondern zeitlich etwas verzögert. Je größer der Abstand des Cursors C1 von der Pfeilspitze ist, desto schneller erfolgt deren Nachführung, so dass sie sich nie weit vom Cursor C1 entfernt. Ist um die Pfeilspitze der weiter unten beschriebene Bereich R2 aktiviert, wird nur der Abstand zwischen Cursor und Bereichsgrenze von R2 berücksichtigt. Auf die gerade beschriebene Weise kann der Soll-Bildausschnitt analog zur Kameraausrichtung in beliebige Richtung und mit beliebiger Geschwindigkeit verlagert werden, wobei diese Verlagerung wegen der angewandten Beschleunigungs-Algorithmen feinfühlig möglich ist. Das Schwanken der Kamera kann während der Ausführung während dieser analogen Bereichs-Funktion jedoch nicht ganz unterdrückt werden, da es die Modifikation des Geschwindigkeitsvektors mit beeinflußt.

Sobald die Geschwindigkeit wieder auf den Anfangswert und damit die Pfeillänge wieder auf die Anfangslänge (Kreisradius) reduziert wurde, verschwindet der Pfeil und der Lagedifferenz-Bereich R1 wird wieder aktiv.

Weiterhin wird vorzugsweise ein Ausrichtungs-Differenzbereich R2 vorgesehen. Er wird an der Spitze des Geschwindigkeits-Vektors V vorzugsweise in Form eines Kreises R2 angezeigt, dessen Radius vorzugsweise variabel und gleich der halben Pfeillänge ist, wobei er aber zweckmäßigerweise nicht größer als ein vorgegebener Maximalwert R2m dimensioniert werden sollte.

Die dem Bereich R2 zugeordnete diskrete Bereichs-Funktion wird ausgeführt, wenn der Ausrichtungs-Cursor C1 in diesen Kreis R2 gesteuert wird. Die Bereichs-Funktion hält dann die momentane Soll-Geschwindigkeit und Soll-Richtung der Bildausschnitts-Verlagerung konstant, solange der Cursor in diesem Kreis R2 gehalten wird.

Die Anzeige des Bereichs R2 kann vorzugsweise auf Wunsch entfallen, wenn stattdessen z.B. der Cursor C1 bei Annäherung an den (jetzt unsichtbaren) Kreisrand bzw. nach dessen Überschreiten seine Farbe und/oder Blinkfrequenz usw. entsprechend ändert.

Der Vorteil dieses in seiner Lage variablen Bereiches liegt darin, dass vom Anwender mittels Steuern des Cursors C1 in den stets in der Nähe des Cursors befindlichen Bereich R2 auf intuitive Weise eine Beschleunigung einer Bildausschnitts-Bewegung beendet und in eine gleichförmige Bewegung übergeleitet werden kann.

Ein Positions-Cursor C2 spiegelt die Abweichung des Bezugspunktes des Bildaufnahmegerätes von einer Soll-Position der Umgebung wider. Die Auswirkung dieses Abstands mit ihren unvermeidbaren Schwankungen sollte vor allem bei extremen Teleaufnahmen berücksichtigt und von der Kompensations-Vorrichtung kompensiert werden.

Hierzu wird vorzugsweise eine diskrete Bereichs-Funktion für die Stabilisierung der Kamera-Positions-Schwankungen und ein ihr zugeordneter Positions-Differenzbereich vorgesehen, welcher z.B. in Form eines Kreises P1 im Zentrum des Sucherbildes angezeigt wird, dessen Fläche einem Positionsdifferenz-Wertebereich von z.B. 8 cm Durchmesser entspricht. P1 fällt der Übsersichtlichkeit halber mit dem Kreis R1 zusammen. Die Bereichs-Funktion übergibt Größe und Richtung dieser Differenz, wie weiter oben bereits beschrieben, an die Kompensations-Vorrichtung. Sie wird ausgeführt, wenn ein z.B. durch ein kleines Quadrat dargestellter Positions-Cursor C2 mittels Bewegen des Bildaufnahmegerätes zur Seite hin und in der Höhe in den Bereich P1 gesteuert und dort gehalten wird. Bei Filmkameras wird P1 vorzugsweise während Aufnahmepausen ein wesentlich kleinerer Wertebereich zugeordnet, was den Vorteil hat, dass C2 bei Aufnahmebeginn stets in der Nähe des Zentrums von P1 liegt.

Befindet sich der Cursor C2 außerhalb des Lagedifferenz-Bereichs P1 im restlichen Bereich P2, wird die Abweichung zum Bezugspunkt der Umgebung nach einem Algorithmus stets wieder auf die Bereichs-Grenze P1 zurückgeführt. Dies entspricht einem Mitbewegen des zur Soll-Bildausschnitts-Kennzeichnung dienenden Positions-Bezugspunktes der Umgebung mit der Kamera.

Im folgenden sollen Bereiche, Funktionen und Anzeigen zur Horizont-Differenz beispielhaft dargestellt werden:

Ein Horizont-Cursor C3 spiegelt die Abweichung des Kamerahorizonts vom Soll-Horizont wider. Er wird vorzugsweise durch 2 kurze Linien am Sucherdisplay-Rand angezeigt, die auf einer gedachten, durch das Displayzentrum gehenden, Linie liegen, deren Lage analog zum Winkel zwischen dem Kamerahorizont und dem Soll-Horizont ist, wobei der Soll-Horizont vorzugsweise stets waagerecht durch das Sucherbildzentrum verläuft.

Vorzugsweise wird eine diskrete Bereichs-Funktion für eine zum realen Horizont parallele Soll-Horizontlage vorgesehen. Sie wird ausgeführt, wenn der Horizont-Cursor C3 mittels Ausrichten der Kamera um ihre optische Achse in den entsprechenden Lagedifferenz-Bereich H1 am Sucherbildrand gesteuert wird und dort gehalten wird. Dieser Bereich umfaßt z.B. einen Winkel von +- 3 Grad zum Sollhorizont. Die Bereichs-Funktion setzt dann den Soll-Bildhorizontwinkel auf Null. Hierauf wird dann von der Kompensationsvorrichtung automatisch der abgebildete Bildhorizont parallel zum realen Horizont gehalten, wobei dann seine Lage vom Zittern und Schwanken der Kamera nicht mehr beeinflußt wird.

Weiterhin wird vorzugsweise eine analoge Bereichs-Funktion für eine Änderung der Soll-Horizont-Lage vorgesehen. Die Drehung und die Drehgeschwindigkeit des Soll-Horizonts sollten vorzugsweise in etwa der Drehung der Kamera um ihre optische Achse folgen. Diese analoge Bereichs-Funktion wird ausgeführt, wenn der Horizont-Cursor C3 durch Drehen des Bildaufnahmegerätes um seine optische Achse aus dem zur momentanen Horizontlage gehörenden Horizontdifferenz-Bereich heraus gesteuert wird. Sie ändert dann den Soll-Horizontwinkel umso schneller, je weiter der Cursor C3 von dem Bereich H1 bzw. H2 entfernt ist. Während der Ausführung dieser analogen Bereichs-Funktion geht das Schwanken der Kamera mit in die Bewegung des Bildhorizonts ein.

Weiterhin wird vorzugsweise eine diskrete Bereichs-Funktion für eine Konstanthaltung der momentanen Soll-Horizontlage vorgesehen. Diese wird ausgeführt, wenn der Cursor C3 mittels Ausrichten der Kamera um ihre optische Achse in den entsprechenden Lagedifferenz-Bereich H2 am Sucherbildrand gesteuert und dort gehalten wird. Dieser Bereich H2 wird erst bei Abweichung des Sollhorizonts vom Umgebungs-Horizont angezeigt. Der Lagedifferenz-Bereich liegt vorzugsweise links und/oder rechts vom Sucherbildzentrum und umfasst z.B. einen Winkel von +- 2 Grad. Die diskrete Bereichs-Funktion hält dann den momentanen Soll-Horizontwinkel konstant. Hierauf wird dann automatisch der abgebildete Bildhorizont parallel zum Sollhorizont gehalten, wobei seine Lage vom Zittern und Schwanken des Bildaufnahmegeräts nicht beeinflusst wird.

Vorzugsweise werden für Filmkameras Lagedifferenz-Bereiche und diskrete Bereichsfunktionen für einen horizontalen oder vertikalen Schwenk vorgesehen. Diese werden vorzugsweise wie weiter unten beschrieben, mittels Auswahl aus einem Menü, aktiviert, wobei gleichzeitig die gewünschte maximale Schwenkgeschwindigkeit vorgewählt werden kann. Anschließend beginnt der Schwenk vorzugsweise in der Richtung, in welcher der Cursor C1 den zentralen Bereich für Bildstillstand verlässt, wobei die Bewegungsrichtung des Bildausschnitts auf horizontale bzw. vertikale Bewegung beschränkt wird. Der Anlauf erfolgt vorzugsweise mit konstanter Beschleunigung, bis die vorgewählte Schwenkgeschwindigkeit erreicht ist. Der Auslauf erfolgt ebenfalls mit gleicher Abbremsbeschleunigung, wenn der Cursor wieder in den zentralen Bereich geführt wird. Nach Stillstand werden wieder die normalen Lagedifferenz-Bereiche aktiviert.

Aufgrund der Verwendung nur diskreter Bereichsfunktionen ergibt sich der Vorteil, dass alle Phasen des Schwenks, einschließlich Anlauf und Auslauf frei von unerwünschten Schwankungen bleiben. In Zusammenhang mit der Kompensation von Horizontschwankungen können dann aus freier Hand Schwenkaufnahmen gemacht werden, welche gleichmäßiger als mit einem Stativ aufgenommene sind.

Folgend werden noch drei Sonderfunktionen angeführt, welche erst durch die Anwendung der in den Ansprüchen 1 bis 4 dargelegten erfindungsgemäßen Prinzipien möglich sind:

Im folgenden soll eine Funktion zur Systemsteuerung während einer Aufnahme beispielhaft dargestellt werden:

In einer bevorzugten Ausführungsform der Erfindung entsprechend Anspruch 8, kann während einer Tastenbetätigung etc. ein Ausrichtungsdifferenz-Bereich aktiviert und angezeigt werden, welcher sich vorzugsweise über das ganze Display erstreckt und dessen Bereichs-Funktion die momentane Bewegung des Bildausschnitts konstant hält. Eine derartige Taste kann z. B. an einer geeigneten Stelle des Gehäuses des Bildaufnahmegeräts vorgesehen sein. Diesem Bereich sind weitere beschriftete oder mit Symbolen versehene Ausrichtungsdifferenz-Bereiche überlagert, deren Bereichsfunktionen Systemparameter des Bildaufnahmegerätes, wie etwa Weißabgleich, Farbtemperatur, Graufilter, Blende, Belichtungszeit, Aktivierung von Lagedifferenz-Bereichen mit Auswahl einer maximalen Geschwindigkeit für einen Schwenk, etc. steuern, wenn sie mittels entsprechendem Ausrichten des Bildaufnahmegerätes ausgewählt und z.B. beim Loslassen der Taste ausgeführt werden.

Der Vorteil dieser Bereichsfunktion liegt darin, dass mittels entsprechendem Ausrichten des Bildaufnahmegerätes eine beliebige Steuerfunktion gezielt ausgeführt werden kann, und dies sogar während einer laufenden Aufnahme, ohne das Auge vom Sucherbild zu nehmen und ohne Störung des Bildausschnitts und dessen Bewegung.

Im folgenden soll eine Funktion zur Scharfstell-Nachführung während einer Aufnahme beispielhaft dargestellt werden:

Weiterhin ist vorzugsweise während einer derartigen Tastenbetätigung etc, ein Ausrichtungsdifferenz-Bereich aktivierbar, dessen Grenzen dem Sucherbild optisch überlagert sind und einen wesentlichen Teil des Sucherbildes umfassen und dessen Bereichs-Funktion zum einen die momentane Bewegung des Bildausschnitts konstant hält und zum anderen laufend aus der von einem Cursor angezeigten Lagedifferenz unter Auswertung der momentanen Brennweite der Optik die entsprechende Bildausschnitts-Position ermittelt und an eine Scharfstell-Automatik zur Scharfstellung auf diese Stelle des Bildausschnitts weiterleitet. Der restliche Ausrichtungsdifferenz-Bereich wird während der Tastenbetätigung vorzugsweise einer analogen Bereichsfunktion zur Verlagerung des Bildausschnitts zugeteilt.

Der Vorteil dieser Bereichsfunktion liegt darin, dass sogar während einer laufenden Aufnahme mittels entsprechendem Ausrichten des Bildaufnahmegerätes gezielt auf eine beliebige Stelle des Sucherbildes automatisch scharfgestellt werden kann, so dass sowohl gezielte Schärfe-Verlagerungen möglich werden, als auch das laufende Scharfstellen auf ein sich im Bildausschnitt bewegendes Objekt.

Im folgenden sollen Funktionen zur Vorprogrammierung und programmgesteuerten Ausführung eines Bildausschnitts-Verlaufs für Filmkameras dargestellt werden.

Auch dies wird unter Verwendung der vorhandenen Vorrichtungen auf sehr einfache Weise und ohne nennenswerten technischen Aufwand erreicht. Ein solcher Ablauf wird z.B. wie folgt implementiert:
- Der Kameramann richtet die Kamera auf das Startbild aus.
- Der Kameramann betätigt einen Startbild-Taster und beginnt mit der Bildverlagerung. Die Systemsteuerung legt in zeitlich regelmäßigen Abständen die jeweilige momentane Lage des Bildausschnitts, den jeweiligen Bildwinkel und die jeweilige Entfernung in einem Speicher ab.
- Der Kameramann betätigt einen End-Taster, wenn das gewünschte Endbild erreicht ist und lange genug gezeigt wurde.
- Die Systemsteuerung glättet Unregelmäßigkeiten des gespeicherten Bewegungsablaufs nach mathematischen Algorithmen.
- Die Bildlagesteuerung führt den Bildausschnitt langsam zum Startbild zurück und weist den Kameramann mittels Blinken des zentralen Kreises R1 im Display an, den Richtungs-Cursor C1 innerhalb oder zumindest in der Nähe des blinkenden Kreises zu halten, während die Kamera auf die Startposition zurückkehrt. Ist die Startposition erreicht, hört das Blinken des zentralen Kreises auf.
- Der Kameramann beginnt zu filmen, womit die Bildlagesteuerung den gespeicherten Bewegungsablauf startet und den Kameramann mittels Blinken des zentralen Kreises R1 anweist, den Richtungs-Cursor C1 innerhalb oder zumindest in der Nähe des blinkenden Kreises zu halten. Hiermit wird der Kameramann angewiesen, wie er die Kamera ausrichten muss, damit die Kompensations-Vorrichtung ihre technisch beschränkten Bereichsgrenzen nicht überschreitet. Es wird jetzt exakt der gewünschte Bildausschnitts-Verlauf aufgezeichnet, wobei, falls technisch vorgesehen, fortlaufend auch der Bildwinkel des Objektivs und die Entfernung modifiziert werden.

Anhand eines Beispiels für ein stabilisiertes Fernglas wird folgend eine einfache Variante der Erfindung beschrieben, welche einen stillstehenden Bildausschnitt ermöglicht, der vom Einflusses ungewollter Bewegungen des Fernglases im wesentlichen befreit ist, bei gleichzeitiger Kontrolle des Anwenders darüber, wann und für wie lange ein Bildstillstand erfolgen soll, bzw. wann der Bildausschnitt verlagert werden soll.

Mittels eingebauten Kreisels wird auf bekannte Weise die Bewegung der konstruktiven optischen Achse registriert und ständig die Lagedifferenz zu einer z.B. in einem Speicher geführten Soll-Lage ermittelt. Von einer optischen Kompensations-Einrichtung wird die Auswirkung dieser Lagedifferenz auf den abgebildeten Bildausschnitt ständig vollständig und für alle Frequenzen der Lagedifferenz kompensiert.

Das heißt, der abgebildete Bildausschnitt steht völlig still, solange die Soll-Lage sich nicht verändert und solange die Lagedifferenz nicht die von der KompensationsEinrichtung kompensierbaren Werte überschreitet.

Von der erfindungsgemäßen Stabilisierungs-Einrichtung wird entsprechend Anspruch 2 ein erster Lagedifferenz-Bereich in Form eines Kegels mit z.B. einem Winkel von 2 Grad um die Soll-Lage der optischen Achse vorgegeben und diesem Bereich die Aufgabe "Bildauschnitts-Stillstand" zugeordnet. Solange sich die Lagedifferenzwerte innerhalb dieses Bereichs befinden, werden die Soll-Lagedaten nicht verändert.

Weiterhin wird ein zweiter Lagedifferenz-Bereich definiert, der aus allen restlichen von der KompensationsEinrichtung kompensierbaren Lagedifferenz-Werten besteht, und diesem Bereich die Aufgabe "Verlagerung des Bildausschnitts" zugeordnet. Solange sich die Lagedifferenzwerte innerhalb dieses zweiten Bereichs befinden, werden die Soll-Lagedaten nach einem Algorithmus verändert, in den vor allem Richtung und Abstand der momentanen Lagedifferenz bezüglich des ersten Lagedifferenzbereichs eingehen. Je größer der Abstand zur Bereichs-Grenze, desto größer die Geschwindigkeit der Soll-Bildverlagerung. Dies erfolgt vorzugsweise nach einem exponentiellen Zusammenhang: bei einer Lagedifferenz von z.B. 2, 3, 4, bzw. 5 Grad relativ zur Soll-Lage wird die Geschwindigkeit der Soll-Lageänderung dann z.B. auf 0, 1, 10, bzw. 100 Grad je Sekunde gesetzt. Für eine Lagedifferenz von z.B. 3 Grad rechts vom Soll-Bildzentrum wird dann die horizontale Komponente der Soll-Lagedaten kontinuierlich um 1 Grad je Sekunde erhöht.

Entsprechend Anspruch 1 wird hier die Mitteilung der Lagedifferenz z.B. wie folgt realisiert: Um das Sucherbild herum werden beispielsweise acht Pfeile optisch dargestellt, deren Spitze auf das Sucherbildzentrum zeigen. Diese Pfeile können in ihrer Farbe und/oder Helligkeit und/oder Blinkfrequenz moduliert werden, wobei dem Anwender aus der Art der Darstellung der Bezug der Lagedifferenz zu den Lagedifferenz-Bereichen z.B. wie folgt erkenntlich gemacht wird: solange sich die Lagedifferenzwerte im zentralen ersten Lagedifferenz-Bereich A befinden, leuchten die Pfeile statisch grün. Ihre Helligkeit spiegelt die Größe und Richtung des momentanen Lagedifferenz-Werts wider. Für eine Lagedifferenz Null leuchten alle Pfeile gleich hell. Für eine Lagedifferenz von z.B. 1 Grad nach rechts, leuchtet der rechte Pfeil heller, die anderen Pfeile entsprechend dunkler. Nähert sich die Lagedifferenz der Bereichsgrenze von 2 Grad, so wird der entsprechende Pfeil gelb und zusätzlich gegebenenfalls auch blinkend dargestellt. Hat die Lagedifferenz die Bereichsgrenze überschritten, wird der entsprechende Pfeil rot dargestellt.

Hiermit kann der Anwender ganz gezielt einen Bildstillstand bewirken, indem er durch entsprechendes Ausrichten des Fernglases die Pfeile im Grünen Bereich hält. Dies ist ihm ohne große Mühe möglich, da hier entsprechend Anspruch 3 der zentrale Lagedifferenz-Bereich für die Aufgabe "Bildstillstand" mit zwei Grad um die Soll-Lage der optischen Achse so groß gewählt ist, dass er größer als die durch das Zittern und Schwanken des Anwenders verursachte Störungswert-Amplitude ist.

In einer weiteren Ausführungsform der Erfindung kann der Anwender den zentralen Lagedifferenz-Bereich 1 für Bildstillstand mittels Tastenbetätigung von zwei auf z.B. vier Grad um die Soll-Lage der optischen Achse erhöhen. Dadurch ist es ihm noch leichter möglich, selbst bei schwankendem Untergrund wie auf einem Boot, die Pfeile im grünen oder gelben Bereich zu halten und damit einen ruhig stillstehenden und schwankungsfreien Bildausschnitt zu erreichen.

Anders als bei herkömmlichen Lösungen, kann so vermieden werden, dass der Bildausschnitt schwankt oder dass die Ausrichtung des Fernglases langsam und von ihm unbemerkt von der gewünschten Soll-Lage abwandert und sich dann der Bildausschnitt ungewollt zu verlagern beginnt.

Der Anwender bestimmt ebenso, wann sich der Bildausschnitt verlagern soll. Hierzu richtet er das Fernglas solange nach z.B. rechts aus, bis der rechte Pfeil rot wird, wonach sich der Bildausschnitt nach rechts zu bewegen beginnt. Dies erfolgt umso schneller je schneller er das Fernglas nach rechts bewegt. Da bei dieser einfachen Variante der Erfindung die Geschwindigkeit der Bildausschnitts-Verlagerung für Geschwindigkeiten größer Null stets von der momentanen Größe der Lagedifferenz abhängt, kann keine optimale Stabilisierung der Bildausschnitt-Verlagerungsbewegung erfolgen, was bei Ferngläsern aber auch nicht von großer Bedeutung ist. Sobald durch entsprechendes Ausrichten des Fernglases die Pfeile wieder in den grünen bzw. gelben Bereich gesteuert werden, erfolgt ein sofortiger und überschwingungsfreier Bildstillstand.

Diese einfache Variante der Erfindung kann natürlich auch für eine auf chemischem Film aufzeichnende Filmkamera oder für eine Konsumer-Videokamera verwendet werden.

Bei Ferngläsern oder Videokameras mit ausschließlich Rotationsbewegungs-Sensoren und ohne Kreisel, welche die absolute Verlagerungs-Geschwindigkeit des Bildausschnitts nicht ermitteln und damit keinen Bildausschnitts-Stillstand erkennen können, kann dem ersten Lagedifferenzbereich die Aufgabe "gleichförmige Bewegung" des Bildausschnitts, und dem zweiten Lagedifferenzbereich die Aufgabe "Änderung der momentanen Bewegung" des Bildausschnitts zugeordnet werden. Auch hiermit kann ein Bildstillstand erreicht und aufrechterhalten werden, indem der Anwender mittels entsprechendem Ausrichten des Fernglases zuerst eine momentane Bewegung auf Stillstand abbremst und dann die Lagedifferenz im ersten Bereich hält.

Da diese einfache Variante der Erfindung nur die Lagedifferenz bezüglich der Soll-Ausrichtung der optischen Achse berücksichtigt, kann bei starkem Vergrößerungsfaktor und geringer Entfernung kein absolut ruhig stehender Bildausschnitt erzielt werden. Diese Unstabilität könnte jedoch mittels Berücksichtigung der Positions-Differenz unterdrückt werden, was technisch nur einen geringen zusätzlichen Aufwand bedeutet. Die fehlende Stabilisierung der Horizontlage und der Bildausschnitts-Bewegung ist dagegen bei einem Fernglas von nur geringer Bedeutung.

In Figur 3 ist ein Funktionsdiagramm einer einfachen Ausführungsform einer erfindungsgemäßen Bild-Stabilisierung dargestellt. In der weiteren Beschreibung wird nur die Ausrichtung der optischen Achse berücksichtigt, was für Konsumer-Ferngläser oder Konsumer-Videokameras durchaus ausreichend sein kann, da unerwünschte Bewegungen der optischen Achse bei weitem die größte Auswirkung auf die Bildruhe haben. Die eventuelle Berücksichtigung der Position des Bildaufnahmegeräts und der Horizontlage würde entsprechend erfolgen, d. h. es kann jeweils das gleiche Funktionsdiagramm angewandt werden.

Über 301 wird die Sollausrichtung der optischen Achse vorgegeben, indem z. B. entsprechende Richtungswerte in einen Speicher abgelegt werden. Deren Anfangswert kann hier beliebig sein, z. B. 30 Grad Ost und 10 Grad unter dem Horizont.

Mittels eines Ist-Lage-Detektors 302 wird die tatsächliche Lage der optischen Achse ermittelt. Hierzu kann z. B. ein Kreisel verwendet werden. Wenn die Horizontlage und die Ausrichtung zum Zenit nicht ermittelt werden, wird von fiktiven Anfangswerten für die Ausrichtung der optischen Achse ausgegangen, z. B. 0 Grad unter dem Horizont, wobei dann eine Rotation um die Hochachse des Bildaufnahmegerätes den Wert der Ausrichtung bezüglich der Himmelsrichtung ändert und eine Rotation um die Querachse des Bildaufnahmegerätes den Wert bezüglich der Neigung zum Horizont.

Von 303 wird dann die Lage-Differenz zwischen Ist-Lage und Soll-Lage ermittelt und in beiden Komponenten gewandelt, welche von der Kompensationsvorrichtung kompensiert werden können, z. B. in die beiden zu kompensierenden Winkel um die Hochachse und die Querachse des Bildaufnahmegerätes.

Die Kompensationsvorrichtung 304 kompensiert dann die Ausrichtungsdifferenz vollständig und für alle Frequenzen einer sich ändernden Ausrichtungsdifferenz, wie weiter oben bereits angeführt.

Alle technischen Realisationen entsprechend 301 bis 304 sind bereits in vielfältiger Form bekannt und Bestandteil herkömmlicher Stabilisierungsvorrichtungen und werden daher nicht weiter erläutert.

Der Kern der Erfindung besteht aus dem Bereich 311 bis 315. Von einer Systemsteuerung 312 werden hier zwei Lagedifferenzbereiche (311) fest vorgegeben: ein zentraler Bereich LDB-1 von 2 Grad um die Sollrichtung der optischen Achse und ein restlicher Bereich LDB-2 zwischen 2 Grad und 5 Grad um die Sollrichtung der optischen Achse. Die Systemsteuerung beobachtet nun ständig, in welchen Bereich die momentane Ausrichtungs-Differenz der optischen Achse fällt. Gleichzeitig wird die Lagedifferenz bezüglich der Bereichsgrenzen dem Anwender über die Mitteilungs-Einrichtung 313 mitgeteilt, so dass der Anwender mittels entsprechendem Ausrichten des Bildaufnahmegerätes die Lagedifferenz gezielt in einen der Bereiche steuern und dort halten kann.

Hält sich die Lagedifferenz seit einer Mindestzeit im Bereich LDB-1 auf, so wird von der Systemsteuerung die diskrete Bereichsfunktion 314 "Bildstillstand" aufgerufen und ausgeführt, welche die momentanen Soll-Koordinaten der Soll-Ausrichtung der optischen Achse unverändert lässt, so lange diese Bereichsfunktion ausgeführt wird. Auch wenn sich der Lagedifferenz-Wert aufgrund Zitterns und Schwankens des Bildaufnahmegerätes unregelmäßig innerhalb + 2 Grad um die Soll-Ausrichtung bewegt, wird ein still stehendes Bild aufgenommen, da die Soll-Ausrichtung unverändert bleibt und die Kompensationsvorrichtung 304 stets alle Werte und Frequenzen der Lagedifferenzen vollständig kompensiert. Da der Anwender die Lagedifferenz mit Hilfe der Mitteilungseinrichtung innerhalb von LDB-1 beliebig lange halten kann, da sein unvermeidbares Schwanken kleiner als +-2 Grad ist, kann er auf diese Weise einen still stehenden Bildausschnitt mit beliebiger Dauer erreichen, was mit herkömmlichen Lösungen prinzipiell nicht möglich ist.

Wird die Lagedifferenz vom Anwender jetzt in den Bereich LDB-2 gesteuert, so wird von der Systemsteuerung die analoge Bereichsfunktion 315 "Verlagerung/Bewegung" der Soll-Ausrichtung der optischen Achse aufgerufen und ausgeführt, welche die momentane Soll-Ausrichtung der optischen Achse umso schneller verändert, je weiter die Lagedifferenz von der Grenze des Bereiches LDB-2 entfernt ist, wobei die Richtung der Änderung aus der Richtung der Lagedifferenz zum Zentrum von LDB-1 abgeleitet wird. Die Soll-Lage folgt hiermit analog zur Ausrichtung des Bildaufnahmegerätes. Ungewollte Schwankungen der Lagedifferenz gehen jedoch, wie bei herkömmlichen Lösungen, mit in die Verlagerungsgeschwindigkeit ein. Außerdem werden von dieser Bereichsfunktion auch willkürliche Lage-Anfangswerte bei Inbetriebnahme des Bildaufnahmegerätes mit nicht kompensierbaren Lagedifferenzwerten synchronisiert, da jede große Lagedifferenz die Soll-Lage mit hoher Geschwindigkeit nachführt, so dass die Lagedifferenz automatisch in kürzester Zeit auf kompensierbare Werte verringert ist.

In Figur 4 ist ein Funktionsdiagramm einer komplexeren Ausführungsform einer erfindungsgemäßen Bild-Stabilisierung, für z. B. eine professionelle Filmkamera, dargestellt. In der weiteren Beschreibung wird nur auf die Unterschiede zur Ausführungsform entsprechend Figur 3 eingegangen:

Der Hauptunterschied besteht darin, dass es mehr als zwei Lagedifferenzbereiche (hier beispielhaft fünf) gibt, wobei einige von ihnen in ihrer Lage und Größe variabel sind, wie z. B. der Lagedifferenzbereich LDB-4 für die Bereichsfunktion "Unveränderbare Bewegung" der Soll-Bildlage. Dieser Bereich wird von der Systemsteuerung 415 erst aktiviert, wenn die Lagedifferenz den zentralen Bereich LDB-2 für "Bild-Stillstand" verlassen hat. Seine Lage und damit sein Wertebereich sind vorzugsweise eine Funktion der Geschwindigkeit und Richtung der momentanen Verlagerungsgeschwindigkeit der Soll-Bildlage, wie zuvor bereits beschrieben. Solange die Lagedifferenz vom Anwender in diesem Bereich 422 gehalten wird, wird von der Systemsteuerung 415 die Bereichsfunktion 422 ausgeführt, welche die Soll-Koordinaten der Soll-Bildlage, entsprechend der vor Aufruf von 422 vorhandenen Soll-Verlagerungsgeschwindigkeit, gleichmäßig und stetig verändert. Diese gleichmäßige Bewegung des Soll-Bildausschnitts ist dann völlig frei von allen unerwünschten Lagedifferenz-Schwankungen. Dies gilt aufgrund der immer vorhandenen vollständigen Kompensation aller Lagedifferenzwerte natürlich auch für den aufgenommenen Bildausschnitt.

Zur gezielten Steuerung der Lagedifferenz durch den Anwender ist hier ein grafisches Display 418 mit grafischer Anzeige der Lagedifferenzbereiche LDB 1, 2, 3, 4... in Form grafischer Symbole und grafischer Anzeige der Lagedifferenz in Form von Cursorn vorgesehen (siehe auch Beschreibung von Figur 1 und 2).

In Figur 5 ist ein Funktionsdiagramm einer erfindungsgemäßen Bild-Stabilisierung dargestellt, welches aufzeigt, wie herkömmliche Stabilisierungs-Vorrichtungen auch ohne Neukonstruktion modifiziert werden können, um die Vorteile der Erfindung zu nutzen. In der weiteren Beschreibung wird nur auf die Unterschiede zur Ausführungsform entsprechend Figur 3 eingegangen:

Eine herkömmliche Stabilisierungs-Vorrichtung ist mit 501 bis 505 der Gruppe 500 dargestellt. Der Hauptunterschied zur Figur 3 besteht darin, dass von dem Kernbereich 510 der Erfindung nur in den vorhandenen Tiefpassfilter-Algorithmus 505 der herkömmlichen Stabilisierungs-Vorrichtung eingegriffen wird. Im einfachsten Fall wird dieser von der dem Lagedifferenzbereich LDB-1 zugeordneten Bereichsfunktion 514 für "Bild-Stillstand" während der Ausführung dieser Funktion einfach deaktiviert, so dass er die Soll-Bildlage dann nicht mehr verändert. Der Bildausschnitt steht dann unbeeinflusst von Lage-Schwankungen still.

Wird vom Anwender die Lagedifferenz in den Bereich LDB-2 gesteuert und die entsprechende Bereichsfunktion 515 ausgeführt, schaltet diese den Filteralgorithmus wieder en und das Bildaufnahmegerät verhält sich für die Aufgabe der Bildausschnitts-Verlagerung/Bewegung wie eine herkömmliche Stabilisierungs-Vorrichtung.

In Figur 6 ist ein Funktionsdiagramm einer erfindungsgemäßen Bild-Stabilisierung dargestellt, welches aufzeigt, wie eine weitere Variante einer herkömmlichen Stabilisierungs-Vorrichtung auch ohne Neukonstruktion modifiziert werden kann, um die Vorteile der Erfindung zu nutzen. In der weiteren Beschreibung wird nur auf die Unterschiede zur Ausführungsform entsprechend Figur 3 eingegangen:

Eine herkömmliche Stabilisierungs-Vorrichtung ist mit 603 bis 605 der Gruppe 600 dargestellt. Der Hauptunterschied zur Figur 3 besteht darin, dass von dem Kernbereich 610 der Erfindung nur in den vorhandenen Hochpassfilter-Algorithmus 605 der herkömmlichen Stabilisierungs-Vorrichtung eingegriffen wird. Im einfachsten Fall wird dieser von der dem Lagedifferenzbereich LDB-1 zugeordneten Bereichsfunktion 615 für "gleichförmige Bewegung" während der Ausführung dieser Funktion einfach "kurzgeschlossen", so dass alle detektierten Ist-Lageschwankungen jeglicher Frequenz von der Kompensationsvorrichtung 604 kompensiert werden. Der Bildausschnitt behält dann unbeeinflusst von Lage-Schwankungen seine Bewegung bei.

Wird vom Anwender die Lagedifferenz in den Bereich LDB-2 gesteuert und die entsprechende Bereichsfunktion 614 ausgeführt, schaltet diese den Filteralgorithmus wieder ein und das Bildaufnahmegerät verhält sich für die Aufgabe der Änderung der Bildausschnitts-Bewegung wie eine herkömmliche Stabilisierungs-Vorrichtung.

## Patentansprüche

1. Stabilisierungs-Einrichtung,
insbesondere zur Bildstabilisierung und/oder stabilisierten Bildausschnittsverlagerung, für handgeführte Bildaufnahmegeräte, wie einer Filmkamera, einer Fotokamera, eines Fernglases, oder dergleichen, mit einer Einrichtung zur Ermittlung der Lagedifferenz zwischen einer tatsächlichen Lage des Bildaufnahmegerätes und einer Soll-Lage des Bildaufnahmegerätes, und mit einer Kompensations-Vorrichtung zur Kompensation der Auswirkung der ermittelten Lagedifferenz auf einen abgebildeten Bildausschnitt,
**gekennzeichnet durch**
eine Mitteilungseinrichtung zur Mitteilung, insbesondere optischen Anzeige, der Lagedifferenz bezüglich vorgebbarer Lagedifferenz-Werte oder -Wertebereiche, wobei die Mitteilung so erfolgt, dass ein Anwender in die Lage versetzt wird, mittels Ausrichten des Bildaufnahmegerätes die Lagedifferenz auf einen vorgegebenen Wert oder in einem vorgegebenen Wertebereich zu steuern.

2. Stabilisierungs-Einrichtung nach Anspruch 1, **dadurch gekennzeichnet, dass** den Sollbildausschnitt definierende Parameter, wie Lage, Ausrichtung und/oder Bewegung, nach einem Algorithmus vorgebbar sind, welcher für Aufgaben wie z. B. Stillstand oder gleichförmige Bewegung des Bildausschnitts, vom aktuellen Wert der Lagedifferenz nicht oder nur unwesentlich beeinflusst wird, solange dieser Wert, insbesondere vom Anwender gezielt gesteuert, innerhalb eines fest oder variabel vorgebbaren, einer jeweiligen Aufgabe zugeordneten, Lagedifferenz-Bereichs liegt,
und wobei die Auswirkung jeglicher Lagedifferenzen auf den abgebildeten Bildausschnitt von der Kompensations-Vorrichtung, insbesondere vollständig und frequenzunabhängig, kompensierbar ist.

3. Stabilisierungs-Einrichtung nach Anspruch 1 bis 2, **dadurch gekennzeichnet, dass** die Wertemenge eines einer jeweiligen Aufgabe zugeordneten Lagedifferenz-Bereichs, insbesondere auch vom Anwender, größer vorgebbar ist, als der Umfang einer vom Anwender durch sein Zittern und Schwanken bedingten Störungs-Wertemenge.

4. Stabilisierungs-Einrichtung nach Anspruch 1 bis 3, **dadurch gekennzeichnet, dass** für jede der Lagedifferenz-Arten, insbesondere Ausrichtungs-Differenz, Positions-Differenz und Horizont-Differenz, deren jeweilige kompensierbare Lagedifferenz-Gesamt-Wertemenge in Lagedifferenz-Bereiche aufgeteilt wird, welche sich auch überlagern können und deren Werteumfang und Aktivierung von weiteren Parametern abhängig sein kann, und dass jedem der Lagedifferenz-Bereiche zu einem jeweiligen Zeitpunkt eine spezifische Aufgabe und zu deren Lösung eine spezifische Bereichs-Funktion, etwa zur Modifikation der Soll-Bildausschnitts-Lage oder zu sonstigen Steuerzwecken, zugeordnet ist, wobei der einer jeweiligen Lagedifferenz entsprechende Lagedifferenz-Bereich, der die momentanen Lagedifferenz-Werte seit einer vorgebbaren Mindestzeit enthält, ermittelt wird, und dann die diesem Lagedifferenz-Bereich zugeordnete Bereichs-Funktion ausgeführt wird, wobei die Ausführung auch noch von anderen Parametern, etwa dem Betätigen einer Taste abhängig sein kann.

5. Stabilisierungs-Einrichtung nach Anspruch 1 bis 4, **dadurch gekennzeichnet, dass** Lagedifferenz-Bereiche und deren diskrete Bereichs-Funktionen, in deren Ergebnis der Lagedifferenzwert nicht mit eingeht, zur Vorgabe der Soll-Bildausschnittslage für eine oder mehrere der folgenden Stabilisierungs-Aufgaben vorgesehen sind, wie z. B.
- Stillstand des Bildausschnitts-Zentrums,
- Beibehaltung der momentanen Bewegung des Bildausschnitts-Zentrums,
- Beibehaltung eines gewünschten Bildhorizonts,
- Beschränkung der Bewegung auf Vorgabewerte und Maximalwerte,
- Beschleunigung der Bewegung bei vorgegebener Bewegungsrichtung,
- Ausführung eines vorprogrammierten Bewegungsablaufs, mit Anweisungs-Mitteilung,
und/oder dass
Lagedifferenz-Bereiche und deren analoge Bereichs-Funktionen, in deren Ergebnis jeweils Richtung und Abstand des Lagedifferenz-Wertes von einem Lagedifferenz-Bereich einer diskreten Bereichs-Funktion mit eingeht, zur Vorgabe der Soll-Bildausschnittslage vorgesehen sind, bei der die Verlagerung des Soll-Bildausschnitts analog zur Ausrichtung des Bildaufnahmegeräts erfolgt, wie z. B.
- Änderung der momentanen Bewegung des Bildausschnitts-Zentrums,
- Änderung des momentanen Bildhorizonts,
- Änderung des Positions-Bezugspunktes des Bildaufnahmegerätes,

6. Stabilisierungs-Einrichtung nach Anspruch 1 bis 5, **dadurch gekennzeichnet, dass** ein Vektor V als Maß für die Richtung und Größe der momentanen Soll-Bildausschnitts-Bewegung ermittelt und ggf. auch grafisch angezeigt wird und dass jedem Wert des Vektors ein entsprechender Lagedifferenz-Wert zugeordnet ist, welcher als variables Zentrum eines Lagedifferenz-Bereichs für die diskrete Bereichsfunktion "Beibehaltung der momentanen Bewegung des Bildausschnitts-Zentrums" dient, wobei dieser Bereich in seiner Größe vorgebbar ist und aktiviert wird, sobald der Vektor V größer Null ist, und wobei insbesondere die Lagedifferenz bezüglich dieses Bereichs angezeigt wird.

7. Stabilisierungs-Einrichtung nach Anspruch 1 bis 6, **dadurch gekennzeichnet, dass** die hochfrequenten Schwankungen der Lagedifferenz-Werte nach einem Algorithmus unterdrückt werden, mit Ausnahme der an die Kompensations-Vorrichtung geleiteten Lagedifferenz-Werte.

8. Stabilisierungs-Einrichtung nach Anspruch 1 bis 7, **dadurch gekennzeichnet, dass** einem Lagedifferenzbereich mit einer Bereichsfunktion, welche die momentane Verlagerungsbewegung des Soll-Bildausschnitts zu Null setzt oder konstant hält, ein oder mehrere weitere Lagedifferenzbereiche überlagert sind, deren Bereichsfunktion zusätzlich ausgeführt wird, wenn der Lagedifferenzwert in ihren Bereich fällt oder wenn der Lagedifferenzwert in ihren Bereich fällt und eine Taste etc. betätigt wird.

9. Stabilisierungs-Einrichtung nach Anspruch 1 bis 8, **dadurch gekennzeichnet, dass** Bildausschnittslagen, deren Bewegungspfade und zeitlicher Ablauf und ggf. auch Optik-Parameter, wie Aufnahmewinkel und Entfernung, in einen Speicher ablegbar sind und, insbesondere nach mathematischer Glättung des Bewegungspfades, zur automatischen Ausführung aus diesem wieder auslesbar sind, wobei während des automatischen Ablaufs eine Anweisung an den Anwender erfolgt, die Lagedifferenz in einem vorgegebenen und mitgeteilten Lagedifferenz-Bereich zu halten.

10. Verfahren zur Durchführung einer Bildstabilisierung und/oder stabilisierten Bildausschnittsverlagerung bei einem handgeführten Bildaufnahmegerät, wie einer Filmkamera, einer Fotokamera, eines Fernglases oder dergleichen, bei der eine Lagedifferenz zwischen einer tatsächlichen Lage des Bildaufnahmegerätes und einer Soll-Lage des Bildaufnahmegerätes ermittelt wird, und die Auswirkung einer ermittelten Lagedifferenz auf einen abgebildeten Bildausschnitt kompensiert wird, **dadurch gekennzeichnet, dass** die Lagedifferenz bezüglich vorgebbarer Lagedifferenz-Werte oder - Wertebereiche einem Anwender des Bildaufnahmegerätes mitgeteilt wird, wobei die Mitteilung so erfolgt, dass der Anwender in die Lage versetzt wird, mittels Ausrichtens des Bildaufnahmegerätes die Lagedifferenz auf einen vorgegebenen Wert oder in einen vorgegebenen Wertebereich zu steuern.
